# EUROPEAN PATENT APPLICATION

(11) **EP 3 357 609 A1**
(43) Date of publication of application: **08.08.2018**
(21) Application number: 16850803.4
(22) Date of filing: 11.07.2016
(51) Int. Cl.: B22F 9/24, C22B 3/44, C22B 23/00

(54) **METHOD FOR MANUFACTURING NICKEL POWDER, AND METHOD FOR OPERATING REACTION FACILITY**

(30) Priority: 28.09.2015 JP 2015190478
(71) Applicant: Sumitomo Metal Mining Co., Ltd., Tokyo 105-8716 (JP)
(72) Inventor: DOI, Yasuo, Niihama-shi Ehime 792-0002 (JP); TAKAISHI, Kazuyuki, Niihama-shi Ehime 792-0002 (JP); YAMAGUMA, Ryoma, Niihama-shi Ehime 792-0002 (JP); OZAKI,Yoshitomo, Niihama-shi Ehime 792-0002 (JP); HEGURI, Shin-ichi, Niihama-shi Ehime 792-0002 (JP)
(74) Representative: Jones, Nicholas Andrew
(86) International application number: PCT/JP2016/070398
(87) International publication number: WO 2017/056626

(57) **Abstract**

Provided is a method for manufacturing nickel powder whereby a reduction in production efficiency due to abrasion of a flash vessel connected to a pressurized container can be suppressed when nickel powder is generated using the pressurized container and subsequently recovered. The method for manufacturing nickel powder pertaining to the present invention comprises charging a pressurized container with a nickel sulfate ammine complex solution and seed crystals, adding hydrogen gas to the pressurized container, and reducing the nickel included in the nickel sulfate ammine complex solution, wherein, when a nickel powder slurry obtained in the pressurized container is extracted to a flash vessel connected to the pressurized container, the slurry is extracted to the flash vessel while the supply rate of the nickel ammine complex solution to the pressurized container and/or the extraction rate of the nickel slurry from the pressurized container is controlled so that the liquid level in the pressurized container is in a fixed range.

## Description

### TECHNICAL FIELD

The present invention relates to a method for manufacturing nickel powder, and more specifically, to a method for manufacturing nickel powder by which nickel powder can be stably recovered from a flash vessel provided at an outlet of a pressurized container in a method for obtaining nickel powder from a nickel sulfate ammine complex solution in the pressurized container by a reduction treatment using hydrogen gas and a method for operating a reaction facility at this time.

### BACKGROUND ART

As a method for recovering nickel, a method for dissolving sulfide ore or oxide ore containing nickel in a high-temperature furnace and recovering nickel as a form of ferronickel, or a method for obtaining a sulfide (nickel matte), then separating impurities from a solution in which the sulfide is dissolved in an acid, and then electrowinning the solution to obtain electric nickel has been performed. However, these methods have a problem in that a large-scaled facility is necessary.

Further, in recent years, it has been difficult to obtain a relatively high-grade nickel-containing raw material suitable for the aforementioned treatment, and a nickel recovery method including a hydrometallurgical method in which a low grade nickel oxide ore is acid leached under a high temperature and a high pressure and nickel is recovered from the obtained leachate has been used.

Furthermore, in recent years, as the industrial application of nickel, other than stainless steel or a special alloy that has been used previously, application of batteries, electronic materials, or the like has been rapidly increased, and thus, for use of these applications, a demand for readily soluble briquettes obtained by sintering nickel powder has been increased.

In this regard, as a method for industrially manufacturing nickel powder, which is necessary for manufacturing briquettes, by using a hydrometallurgical process, for example, a method as disclosed in Patent Document 1 is mentioned.

Specifically, the method disclosed in Patent Document 1 is a method for producing nickel powder from a nickel sulfate ammine complex solution, the method performing a treatment including: (1) a seed crystal production step of mixing a nickel sulfate solution and hydrazine to produce nickel powder having an average particle size of 0.1 µm to 5.0 µm serving as seed crystals; (2) a seed crystal addition step of adding the obtained nickel powder as seed crystals to the nickel sulfate ammine complex solution to form a mixed slurry; (3) a reduction step of blowing hydrogen gas into the mixed slurry obtained in the seed crystal addition step to form a reduced slurry containing nickel powder formed by precipitation of a nickel component in the mixed slurry on the seed crystals; and (4) a growth step of subjecting the reduced slurry obtained in the reduction step to solid-liquid separation to separate and recover the nickel powder as a solid phase component and then blowing hydrogen gas into a solution prepared by adding the nickel sulfate ammine complex solution to the recovered nickel powder to grow the nickel powder to form high purity nickel powder. According to this method, it is possible to easily obtain high purity nickel powder necessary for batteries and electronic materials.

However, in a case where nickel powder is industrially obtained by the method of Patent Document 1 described above, there is no special problem in terms of quality, but there is a problem in that a facility operation rate is reduced.

That is, in the aforementioned method, the treatment in the reduction step or the growth step is performed under a high temperature and a high pressure by charging a mixed slurry in a pressurized container such as an autoclave; however, for example, as described in Patent Document 2, an operation is performed in many cases in which an ordinary pressure container called a flash vessel is connected to the pressurized container, a high-temperature and high-pressure slurry discharged from the pressurized container is reduced to a degree of temperature or pressure at which the slurry can be handled. However, abrasion of the flash vessel is quick, and it is necessary to perform maintenance and repair while operations are periodically stopped or a complicated operation, for example, in which a plurality of flash vessels are prepared and alternately used in order to avoid the stop of the operation. Therefore, costs accordingly increase and this causes a reduction in production efficiency.

A reduction in efficiency due to abrasion of the flash vessel becomes a significant problem when nickel powder is obtained using a pressurized container by a reduction treatment by hydrogen gas. Incidentally, in the technique disclosed in Patent Document 2, abrasion is not particularly regarded as a problem.
Patent Document 1: Japanese Unexamined Patent Application, Publication No. 2015-140480
Patent Document 2: Japanese Unexamined Patent Application, Publication No. 2010-59489

### DISCLOSURE OF THE INVENTION

### Problems to be Solved by the Invention

The present invention is proposed in view of such circumstances, and an object thereof is to provide a method for manufacturing nickel powder by which a reduction in production efficiency due to abrasion of a flash vessel connected to a pressurized container is suppressed when nickel powder is produced using the pressurized container and then recovered.

### Means for Solving the Problems

The present inventors have conducted intensive studies in order to solve the aforementioned problems. As a result, they have found that, when a slurry containing nickel powder produced in a pressurized container is discharged to a flash vessel, by maintaining a liquid volume in the pressurized container in a fixed range, abrasion in the flash vessel can be effectively suppressed, thereby completing the present invention.
(1) A first invention of the present invention is a method for manufacturing nickel powder, the method including: charging a nickel sulfate ammine complex solution and seed crystals in a pressurized container; adding hydrogen gas to the pressurized container; and reducing nickel included in the nickel sulfate ammine complex solution to manufacture nickel powder, in which, when a slurry containing the nickel powder obtained in the pressurized container is extracted to a flash vessel connected to the pressurized container, the slurry is extracted to the flash vessel while a supply rate of the nickel ammine complex solution to the pressurized container and/or an extraction rate of the slurry from the pressurized container is controlled so that a liquid volume in the pressurized container is in a fixed range.
(2) A second invention of the present invention is the method for manufacturing nickel powder in the first invention, in which reduction reaction is performed in the pressurized container by using nickel powder with a particle size of 0.1 µm to 300 µm as the seed crystals and controlling a pressure in the pressurized container to a range of 2.5 MPa to 3.5 MPa and a temperature to a range of 150°C to 185°C.
(3) A third invention of the present invention is the method for manufacturing nickel powder in the first or second invention, in which the nickel powder is recovered by solid-liquid separation in the flash vessel after the slurry containing the nickel powder reaches ordinary pressure and 100°C or lower.
(4) A fourth invention of the present invention is the method for manufacturing nickel powder in any one of the first to third inventions, in which the flash vessel has a structure in which an acid-resistant brick is pasted to an inner surface.
(5) A fifth invention of the present invention is the method for manufacturing nickel powder in any one of the first to fourth inventions, in which, when the slurry containing the nickel powder is extracted to the flash vessel, a certain amount of the slurry is caused to remain in the flash vessel.
(6) A sixth invention of the present invention is a method for operating a reaction facility used in a method for manufacturing nickel powder, the manufacturing method including: charging a nickel sulfate ammine complex solution and seed crystals in a pressurized container; adding hydrogen gas to the pressurized container; and reducing nickel included in the nickel sulfate ammine complex solution, in which the reaction facility includes: the pressurized container; and a flash vessel connected to the pressurized container, extracting a slurry containing the nickel powder obtained in the pressurized container, and reducing the slurry in pressure, and, when the slurry is extracted from the pressurized container to the flash vessel, the slurry is extracted to the flash vessel while a supply rate of the nickel ammine complex solution to the pressurized container and/or an extraction rate of the slurry from the pressurized container is controlled so that a liquid volume in the pressurized container is in a fixed range.

### Effects of the Invention

According to the present invention, when nickel powder is produced using a pressurized container and then recovered, abrasion of the inside of a flash vessel connected to the pressurized container and extracting a slurry containing the obtained nickel powder can be prevented, and a reduction in production efficiency due to the abrasion of the flash vessel can be effectively suppressed.

### BRIEF DESCRIPTION OF THE DRAWINGS

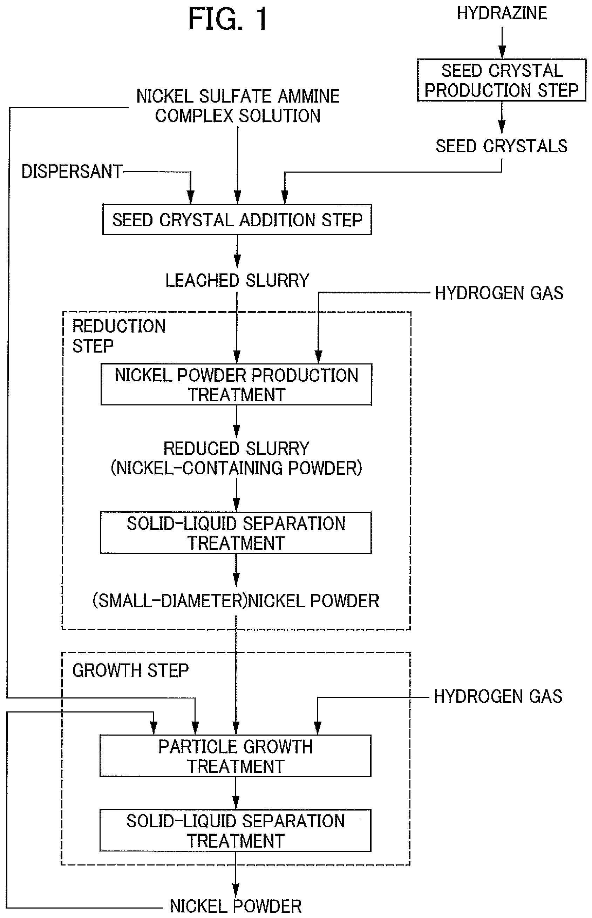

Fig. 1 is a process diagram illustrating an example of the flow of a method for manufacturing nickel powder from a nickel sulfate ammine complex solution.

### PREFERRED MODE FOR CARRYING OUT THE INVENTION

Hereinafter, a specific embodiment of the present invention (hereinafter, referred to as "the present embodiment") will be described in detail. Incidentally, the present invention is not limited to the following embodiment, and various modifications can be made within the range that does not change the spirit of the present invention. Further, in the present specification, the description "x to y" (x and y are arbitrary numerical values) means "x or more and y or less" unless otherwise specified.

### <<1. Outline of Method for Manufacturing Nickel Powder>>

A method for manufacturing nickel powder according to the present embodiment is a method for manufacturing nickel powder by charging a nickel sulfate ammine complex solution and seed crystals in a pressurized container and reducing nickel included in the nickel sulfate ammine complex solution while hydrogen gas is added, in the pressurized container.

Specifically, in this manufacturing method, for example, reduction reaction is performed by using nickel powder with a particle size of 0.1 µm to 300 µm as the seed crystals and controlling a pressure in the pressurized container to a range of 2.5 MPa to 3.5 MPa and a temperature to a range of 150°C to 185°C, thereby obtaining nickel powder. A slurry containing the obtained nickel powder (hereinafter, referred to as "nickel powder slurry") is extracted to the flash vessel connected to the pressurized container, and the high-pressure nickel powder slurry is reduced in pressure and the temperature is decreased in the flash vessel.

At this time, in the manufacturing method according to the present embodiment, the slurry is extracted to the flash vessel while a supply rate of the nickel ammine complex solution to the pressurized container and/or an extraction rate of the nickel powder slurry from the pressurized container is controlled so that a liquid volume in the pressurized container is in a fixed range.

Herein, abrasion of the flash vessel used in the manufacturing method in which nickel is produced from the nickel sulfate ammine complex solution by reduction by the hydrogen gas is quick, and a treatment such as maintenance and repair while operations are periodically stopped is necessary. Thus, production efficiency is reduced. Such abrasion of the flash vessel is significant even when compared with, for example, abrasion occurring in a flash tank conventionally used in a hydrometallurgical method for nickel oxide ore based on a high pressure acid leaching treatment called a HPAL method. This is caused by the fact that the nickel powder produced from the nickel sulfate ammine complex solution by reduction reaction by hydrogen gas is extremely hard as compared with a residue (leaching residue) produced by the hydrometallurgical method for nickel oxide ore and, according to this, abrasion easily occurs.

More specifically, the slurry obtained by acid leaching the nickel oxide ore under a high temperature and a high pressure is one obtained by precipitating a component such as iron, which is subjected to acid dissolution once, as a form of ferric oxide or the like, and since the slurry is a fine and soft substance like clay, occurrence of abrasion does not almost cause a problem. Comparing to this, the nickel powder produced from the nickel sulfate ammine complex solution by reduction reaction using hydrogen gas is a metal having a high hardness, also has a non-uniform form, and is formed in a form having a convexo-concave structure like a file. For this reason, in such a flash vessel extracting the nickel powder, occurrence of abrasion is considered to be significant. Further, when such high hardness nickel powder is extracted into the flash vessel, a large impact is also applied thereto, and thus durability of a facility is also reduced.

As a result of the studies of the present inventors, it has been found that when the nickel powder slurry produced in the pressurized container is extracted to the flash vessel, the liquid level (liquid volume) in the pressurized container is maintained in a fixed range, and thus the abrasion in the flash vessel can be effectively suppressed.

Maintaining of the liquid volume in the pressurized container to be constant indicates, namely, that the supply rate of the nickel sulfate ammine complex solution to the pressurized container and the discharged amount of the nickel powder slurry produced in the pressurized container (the extraction rate to the flash vessel) are controlled in a fixed range, and accordingly, retention time is controlled in a fixed range.

When the retention time is too short, the growth of the nickel powder in the pressurized container is not sufficient so that a large amount of fine nickel powder is produced, and nickel powder like an extremely fine abrasive is produced, which results in an increase in abrasion of the flash vessel to which the nickel powder is extracted. On the other hand, when the retention time is extremely long, coarse nickel powder having a size larger than a desired size is produced so that this nickel powder causes the clogging of pipes or an impact power due to collision to the flash vessel when the nickel powder is discharged is increased, which may affect facility life. Further, extremely coarse nickel powder also tends to easily precipitate in the pressurized container to cause non-uniform nickel powder to be produced, for example, to form further coarser nickel powder, which is not preferable.

In this regard, in the manufacturing method according to the present embodiment, the slurry is extracted to the flash vessel while the supply rate of the nickel sulfate ammine complex solution to the pressurized container and/or the extraction rate of the nickel powder slurry from the pressurized container is controlled so that the liquid volume in the pressurized container is in a fixed range.

In this way, by controlling the extraction rate of the nickel powder slurry to the flash vessel so that the liquid volume in the pressurized container is maintained in a fixed range, the abrasion in the flash vessel can be effectively suppressed. Then, according to this, an efficient operation can be realized and there is no need for facility maintenance and repair and complicated operation using a plurality of facilities, and thus a reduction in production efficiency can be suppressed.

### <<2. Regarding Method for Manufacturing Nickel Powder from Nickel Sulfate Ammine Complex Solution>>

Hereinafter, an operation of discharging the nickel powder slurry produced in the pressurized container to the flash vessel will be described in detail, but prior to the description thereof, a method for manufacturing nickel powder from a nickel sulfate ammine complex solution by a reduction treatment using hydrogen gas will be described.

### [Regarding Each Step of Manufacturing Method]

Fig. 1 is a process diagram illustrating an example of the flow of the manufacturing method. As illustrated in Fig. 1, the method for manufacturing nickel powder from a nickel sulfate ammine complex solution includes (1) a seed crystal production step of producing seed crystals, (2) a seed crystal addition step of adding the seed crystals to a nickel sulfate ammine complex solution, (3) a reduction step of performing reduction by hydrogen gas, and (4) a growth step of growing small-diameter nickel powder produced by reduction and separating and recovering nickel powder.

### (1) Seed Crystal Production Step

The seed crystal production step is, for example, to produce fine nickel powder as seed crystals by mixing hydrazine as a reducing agent with the high purity nickel sulfate solution with less impurities.

Specifically, to the nickel sulfate solution, hydrazine is added in an amount about 0.5 to 2.5 times the amount of nickel in the solution in a molar ratio to cause the reduction reaction to occur, thereby producing nickel powder with an average particle size of 0.1 µm to 300 µm. The nickel powder is used as seed crystals for reaction in a reduction step described below. Incidentally, when the amount of hydrazine added is less than 0.5 time the amount of nickel in a molar ratio, nickel does not completely react; on the other hand, even when the amount exceeds 2.5 times in a molar ratio, reaction efficiency is not affected but the loss of chemicals increases.

Incidentally, in the seed crystal production reaction, an alkaline compound such as ammonia may be added. In a case where ammonia is used as the alkaline compound, regarding the amount of ammonia added, the ammonia can be added, for example, in an amount twice or more the amount of nickel in the nickel sulfate solution in a molar ratio. Incidentally, at this time, the pH of the solution is preferably adjusted to 7 to 12 by using caustic soda or the like.

Further, a small amount of a surfactant may be added. The particle size of the nickel powder to be produced can be reduced by adding the surfactant into the solution and performing the reaction.

The reaction temperature is preferably set to about 25°C to 80°C. When the reaction temperature is lower than 25°C, reaction time increases, and the industrial application of the long reaction time is not realistic. On the other hand, when the reaction temperature exceeds 80°C, the material of a reaction tank is limited to increase the cost of a facility.

When the nickel powder with an average particle size of 0.1 µm to 300 µm is produced in this way, the nickel powder is subjected to solid-liquid separation and supplied to the next step as a nickel powder slurry in a slurry state.

### (2) Seed Crystal Addition Step

In the seed crystal addition step, the nickel powder with an average particle size of 0.1 µm to 300 µm produced in the seed crystal production step is added as seed crystals to the nickel sulfate ammine complex solution serving as the raw material solution in the method for manufacturing nickel powder. The seed crystals are added in the form of the nickel powder slurry to form a mixed slurry containing the seed crystals.

The weight of the seed crystals added at this time is not particularly limited, but is preferably set to 1% to 100% with respect to the weight of nickel in the nickel sulfate ammine complex solution. When the weight of the seed crystals is less than 1% with respect to the weight of nickel, the reaction efficiency during the reduction reaction in the next reduction step is significantly reduced. On the other hand, when the weight of the seed crystals exceeds 100% with respect to the weight of nickel, the amount of the seed crystals used becomes large, which requires much cost for producing seed crystals and is not economical.

Further, a dispersant may be added at the same time in the seed crystal addition step. When the dispersant is added to the nickel sulfate ammine complex solution together with the seed crystals, the seed crystals are efficiently dispersed in the solution, and thus the reaction efficiency in the next reduction step can be improved. Incidentally, the dispersant is not particularly limited, and for example, sulfonate is preferable, and particularly, lignin sulfonate that can be industrially inexpensively obtained is preferable.

### (3) Reduction Step

In the reduction step, a nickel powder production treatment of producing nickel powder and a solid-liquid separation treatment of separating and recovering nickel powder from a slurry containing the produced nickel powder are performed.

Specifically, in the nickel powder production treatment in the reduction step, hydrogen gas is blown to the mixed slurry obtained in the seed crystal addition step to reduce nickel in the slurry and precipitate nickel on the seed crystals.

This nickel powder production treatment is performed in a pressurized container such as an autoclave. Specifically, the inside of the pressurized container is controlled under the conditions of a pressure of 2.5 MPa to 3.5 MPa and a temperature of 150°C to 185°C to cause the reduction reaction to occur.

Regarding the condition in the pressurized container, as described above, the pressure condition during the reaction is set to 2.5 MPa to 3.5 MPa. When the pressure is less than 2.5 MPa, reduction reaction efficiency is reduced. Further, even when the pressure exceeds 4.0 MPa, the effect of improvement in reaction efficiency is not obtained any more; meanwhile, the loss of hydrogen gas increases to reduce the production efficiency.

Further, as described above, the reaction temperature is set to 150°C to 185°C. When the reaction temperature is lower than 150°C, the reduction reaction efficiency is reduced. On the other hand, even when the reaction temperature exceeds 200°C, the effect of improvement in reaction efficiency is not obtained any more; meanwhile, the loss of thermal energy or the like increases.

Incidentally, for example, even in a case where impurities such as magnesium ions, sodium ions, sulfate ions, and ammonium ions are present in the mixed slurry, since all the ions remain in the solution, high purity nickel powder can be produced.

When the reduced slurry containing nickel powder is produced through the nickel powder production treatment, the solid-liquid separation treatment is then performed, and high purity nickel powder is separated and recovered from the reduced slurry. Incidentally, the solid-liquid separation treatment can be performed by a general method, and for example, can be performed by using a solid-liquid separation device such as a thickener. Further, when the solid-liquid separation is performed, the solid-liquid separation is preferably performed while the nickel powder slurry is in a state of ordinary pressure and 100°C or lower, and such pressure-reducing and temperature-lowering treatments are performed in a flash vessel connected to a pressurized container.

### (4) Growth Step

In the growth step, the nickel sulfate ammine complex solution is further added to the high purity nickel powder obtained in the reduction step and hydrogen gas is supplied thereto, and nickel is reduced and precipitated on the high purity nickel powder to grow particles.

Specifically, in the growth step, as described above, a particle growth treatment of reducing and precipitating nickel on the high purity nickel powder to grow particles and a solid-liquid separation treatment of recovering the obtained nickel powder by solid-liquid separation are performed.

The particle growth treatment in the growth step can be performed by using a pressurized container similarly to the nickel powder production treatment in the reduction step, and can be performed under the treatment condition similar to that in the reduction step described above. Further, the solid-liquid separation treatment of separating and recovering the obtained nickel powder can be also performed by a general method using a thickener or the like.

High purity nickel powder having a higher bulk density and a higher particle size can be produced by repeatedly performing such treatments in the growth step a plurality of times.

### [Regarding Productization of Nickel Powder]

The nickel powder obtained by the aforementioned manufacturing method can be productized, for example, by subjecting the nickel powder to a nickel powder briquetting treatment and a briquette calcination treatment to form the nickel powder in a briquette form that is coarser and difficult to oxidize and easy to handle.

### (Nickel Powder Briquetting Treatment)

As a product form of high purity nickel powder, a nickel briquette form is mentioned. In order to obtain a nickel briquette, first, the nickel powder after being dried is processed for shaping with a briquetting machine or the like to obtain nickel briquettes in a block form. Further, at this time, in order to improve the processability to form the briquettes, a material that does not impair the product quality such as water can be added as a binder to the nickel powder.

### (Briquette Sintering Treatment)

The nickel briquettes prepared in the aforementioned briquetting treatment are subjected to roasting and sintering in a hydrogen atmosphere to prepare a briquette sintered compact. This treatment is performed for increasing the strength of the briquettes and removing ammonia and a sulfur component remaining in a trace amount. The temperature in the roasting and sintering is, for example, preferably set to 500°C to 1200°C. When the temperature is lower than 500°C, the sintering is not sufficient; on the other hand, even when the temperature exceeds 1200°C, the efficiency hardly changes but the loss of energy increases.

### <<3. Extraction of Nickel Powder Slurry to Flash Vessel>>

As described above, in the method for manufacturing nickel powder from a nickel sulfate ammine complex solution, at least in the nickel powder production treatment in the reduction step and the particle growth treatment in the growth step, production reaction of nickel powder is caused to occur using a reaction facility provided with a pressurized container such as an autoclave and a flash vessel connected to the pressurized container.

In the pressurized container such as an autoclave, under the high-temperature and high-pressure condition of a pressure of 2.5 MPa to 3.5 MPa and a temperature of 150°C to 185°C, hydrogen gas is added to the slurry containing the nickel sulfate ammine complex solution, and nickel in the solution is reduced to produce nickel powder. According to this nickel powder production reaction, a nickel powder slurry is produced in the pressurized container.

The state of the nickel powder slurry produced in the pressurized container is maintained to be a high-temperature and high-pressure state. Therefore, the nickel powder slurry is extracted from the pressurized container to the flash vessel, a pressure-reducing treatment is performed on the nickel powder slurry in the flash vessel to have a pressure state of ordinary pressure. Further, at the same time, in the flash vessel, the high-temperature nickel powder slurry is naturally cooled to be a nickel powder slurry set to, for example, a temperature of 100°C or lower.

At this time, in the present embodiment, when the nickel powder slurry is extracted from the pressurized container to the flash vessel, the nickel powder slurry is extracted while the supply rate of the nickel ammine complex solution to the pressurized container and/or the amount of the nickel powder slurry discharged from the pressurized container is controlled so that a liquid volume in the pressurized container is in a fixed range.

Herein, the method for controlling the liquid volume in the pressurized container is not particularly limited, but for example, the liquid volume can be controlled by installing a valve, a metering pump, or the like in a supply pipe for the nickel sulfate ammine complex solution to be supplied to the pressurized container, and then performing adjustment of opening/closing (ON/OFF) and opening degree of the valve, adjustment of the flow rate by the metering pump, and the like. Further, extraction of the nickel powder slurry to the flash vessel may be controlled by installing a valve, a metering pump, or the like in a discharge pipe for connecting the pressurized container and the flash vessel and discharging the nickel powder slurry, and similarly, performing adjustment of opening/closing and opening degree of the valve and adjustment of the flow rate by the metering pump.

Incidentally, the liquid volume in the pressurized container, that is, the liquid volume that is maintained in a fixed range is not particularly limited. It is preferable to appropriately adjust the liquid volume depending on the size of the device, a desired amount of production, or the like.

In this way, by controlling the amount discharged to the flash vessel so that the liquid volume in the pressurized container is maintained in a fixed range, the abrasion in the flash vessel can be effectively suppressed. Then, according to this, an efficient operation can be realized, there is no need for facility maintenance and repair and complicated operation using a plurality of facilities, a reduction in production efficiency can be suppressed.

Further, as the flash vessel, a flash vessel may have a structure in which an acid-resistant brick is pasted to the inner surface thereof. By lining the brick to the inner surface of the flash vessel in this way, abrasion can be suppressed more effectively.

Further, when the nickel powder slurry is extracted from the pressurized container to the flash vessel, in a state where a certain amount of the nickel powder slurry remains in the flash vessel, it is preferable to sequentially extract the nickel powder slurry from the pressurized container to the flash vessel in this state. As described above, when a certain amount of the nickel powder slurry remains at all times without the total amount of the nickel powder slurry in the flash vessel being discharged and the inside of the flash vessel being made empty, an impact of the nickel powder slurry to be subsequently discharged to the inside of the flash vessel can be alleviated, abrasion can be suppressed more effectively, and durability can be improved.

When the nickel powder slurry is extracted to the inside of the flash vessel while the extraction rate of the nickel powder slurry is controlled so that the liquid volume in the pressurized container is maintained in a fixed range in this way, the pressure-reducing treatment or the temperature-lowering treatment is performed on the nickel powder slurry in the flash vessel. Specifically, in the flash vessel, the nickel powder slurry is set to be in a state of a pressure of ordinary pressure and a state a temperature of 100°C or lower. Further, after the nickel powder slurry is in a state of ordinary pressure and 100°C or lower, the nickel powder slurry is transferred from the flash vessel to a solid-liquid separation device such as a thickener and then subjected to the solid-liquid separation treatment of separating and recovering the nickel powder. In the manufacturing method according to the present embodiment, since the abrasion of the flash vessel can be effectively suppressed, the pressure-reducing treatment or the temperature-lowering treatment is appropriately carried out in the flash vessel, and thus the nickel powder can be efficiently recovered.

### EXAMPLES

Hereinafter, the present invention will be described in more detail by means of Operation Examples, but the present invention is not limited to the following Examples at all.

### [Operation Example 1]

In a pressurized container with an inner capacity of 190 L equipped with a stirrer, 90 L of a solution containing 362 g/L of ammonium sulfate and 100 g/L of nickel powder with a particle size of 10 µm was charged. Then, the temperature of the pressurized container was increased to 185°C and maintained, and then hydrogen gas was supplied from a cylinder so that the internal pressure of the pressurized container was maintained to 2.5 MPa.

Subsequently, a solution (reaction starting solution) containing a nickel sulfate ammine complex solution (75 g/L as a nickel component) and 330 g/L of ammonium sulfate was supplied to the pressurized container at a flow rate of 1 L/min using a metering pump, and 150 g/L of nickel powder slurry was further added quantitatively at a flow rate of 0.5 L/min. Incidentally, at this time, the hydrogen gas was blown from the cylinder so that the pressure in the pressurized container was maintained to a range of 2.5 MPa to 3.5 MPa.

Regarding the liquid in the pressurized container, while the liquid volume was controlled by a timer so that the liquid volume in the container was maintained to a range of 90 ± 5 L, the supply rate of the reaction starting solution to the pressurized container and the amount of the nickel powder slurry discharged from the pressurized container were managed by operation of a valve, and then the obtained nickel powder slurry was extracted to a flash vessel. In the flash vessel, the accommodated nickel powder slurry was reduced in pressure to ordinary pressure and cooled. After completion of the operation for 45 minutes, the nickel powder slurry was recovered from the bottom outlet of the flash vessel. The temperature of the recovered nickel powder slurry was 56°C.

Incidentally, before the treatment, air in the flash vessel was replaced with nitrogen by blowing nitrogen gas in advance into the flash vessel. Further, in the flash vessel, as an abrasion resistance countermeasure, a structure in which an acid-resistant brick was pasted to an inner surface of the flash vessel was employed. Furthermore, in a connection portion of the flash vessel with the pressurized container, a flow rate adjustment valve called a flash valve or a let-down valve was installed, and a nozzle called a blast tube (or a blast spool) which alleviates an impact when the nickel powder slurry is discharged to the flash vessel was installed from the valve toward the inside of the flash vessel main body.

Further, during the operation, the level of the nickel powder slurry in the flash vessel was maintained to be constant, and thus the impact due to the discharging of the nickel powder slurry from the pressurized container was alleviated. Incidentally, the level of the slurry in the flash vessel may be a depth enough to alleviate the impact of the nickel powder slurry, and the level thereof was appropriately determined while the operation was performed. The nickel powder slurry was recovered from the bottom outlet of the flash vessel.

According to such an operation, the amount of the nickel powder slurry recovered in the flash vessel was 65.5 L in total by the operation for 45 minutes, and the concentration of the nickel powder slurry was 53 g/L.

### [Operation Example 2]

The operation was performed continuously for 96 hours using the same facility and operation condition as those in Operation Example 1 described above.

After completion of the operation, when the inside of the flash vessel was visually observed using a magnifying glass, abrasion or damage of the flash vessel main body was not confirmed at all.

### [Comparative Operation Example 1]

The operation was performed using the facility and liquid condition similar to those in Operation Example 1 described above; however, the liquid was extracted from the inside of the pressurized container every time the operation was performed, and the liquid level in the pressurized container changed in a range of 20 L to 130 L and was not maintained to be constant. Such an operation was performed continuously for 96 hours.

After completion of the operation, when the inside of the flash vessel was visually observed using a magnifying glass, a large number of impact traces or scratches were confirmed and the facility was in a state in which maintenance and repair are necessary sooner or later.

## Claims

1. A method for manufacturing nickel powder, the method comprising: charging a nickel sulfate ammine complex solution and seed crystals in a pressurized container; adding hydrogen gas to the pressurized container; and reducing nickel included in the nickel sulfate ammine complex solution to manufacture nickel powder, wherein
when a slurry containing the nickel powder obtained in the pressurized container is extracted to a flash vessel connected to the pressurized container,
the slurry is extracted to the flash vessel while a supply rate of the nickel ammine complex solution to the pressurized container and/or an extraction rate of the slurry from the pressurized container is controlled so that a liquid volume in the pressurized container is in a fixed range.

2. The method for manufacturing nickel powder according to claim 1, wherein reduction reaction is performed in the pressurized container by using nickel powder with a particle size of 0.1 µm to 300 µm as the seed crystals and controlling a pressure in the pressurized container to a range of 2.5 MPa to 3.5 MPa and a temperature to a range of 150°C to 185°C.

3. The method for manufacturing nickel powder according to claim 1 or 2, wherein the nickel powder is recovered by solid-liquid separation in the flash vessel after the slurry containing the nickel powder reaches ordinary pressure and 100°C or lower.

4. The method for manufacturing nickel powder according to any one of claims 1 to 3, wherein the flash vessel has a structure in which an acid-resistant brick is pasted to an inner surface.

5. The method for manufacturing nickel powder according to any one of claims 1 to 4, wherein, when the slurry containing the nickel powder is extracted to the flash vessel, a certain amount of the slurry is caused to remain in the flash vessel.

6. A method for operating a reaction facility used in a method for manufacturing nickel powder, the manufacturing method including: charging a nickel sulfate ammine complex solution and seed crystals in a pressurized container; adding hydrogen gas to the pressurized container; and reducing nickel included in the nickel sulfate ammine complex solution, wherein
the reaction facility includes:
the pressurized container; and
a flash vessel connected to the pressurized container, extracting a slurry containing the nickel powder obtained in the pressurized container, and reducing the slurry in pressure, and
when the slurry is extracted from the pressurized container to the flash vessel,
the slurry is extracted to the flash vessel while a supply rate of the nickel ammine complex solution to the pressurized container and/or an extraction rate of the slurry from the pressurized container is controlled so that a liquid volume in the pressurized container is in a fixed range.
